# FASCICULE DE BREVET EUROPEEN

(11) **EP 1 937 535 B1**
(45) Date de publication et mention de la délivrance du brevet: **27.04.2011**
(21) Numéro de dépôt: 06820312.4
(22) Date de dépôt: 18.10.2006
(51) Int. Cl.: B62D 6/00, B62D 5/04

(54) **SYSTEME D'AIDE A LA MANOEUVRE POUR UN VEHICULE AUTOMOBILE**
MANÖVRIERHILFESYSTEM FÜR EIN KRAFTFAHRZEUG
CONTROL ASSISTING SYSTEM FOR A MOTOR VEHICLE

(30) Priorité: 19.10.2005 FR 0510661
(43) Date de publication de la demande: 02.07.2008
(73) Titulaire: PEUGEOT CITROËN AUTOMOBILES S.A., 78140 Vélizy Villacoublay (FR)
(72) Inventeur: CAMPO, Marc, 92320 Chatillon (FR); LEFRANC, Sébastien, 91370 Verrieres-le-Buisson (FR)
(86) Numéro de dépôt international: PCT/FR2006/051056
(87) Numéro de publication internationale: WO 2007/045796

(56) Documents cités:
- EP-A- 0 800 980
- EP-A- 1 319 575
- PATENT ABSTRACTS OF JAPAN vol. 1999, no. 03, 31 mars 1999 (1999-03-31) & JP 10 316005 A (KAYABA IND CO LTD), 2 décembre 1998 (1998-12-02)

## Description

### Domaine technique

La présente invention concerne un système d'aide à la manoeuvre d'un véhicule automobile.

Plus particulièrement l'invention se rapporte à un système d'aide du type comportant une direction assistée associée à un volant de direction et à un actionneur d'assistance de direction, dont le fonctionnement est piloté par une unité de traitement d'informations pour appliquer un couple d'assistance sur la direction du véhicule.

### Technique antérieure

Durant les trente dernières, l'industrie automobile a bénéficié de l'essor technologique dans le domaine de l'électronique. Des systèmes auparavant purement mécaniques sont maintenant réalisés avec des compétences dans différents domaines de la mécanique, de l'hydraulique et de l'électronique, ces différents systèmes étant connus par exemple sous le nom de « systèmes mécatroniques ». Ces derniers permettent d'augmenter très nettement les prestations du véhicule pour une commande avancée.

Parmi ces derniers, on peut citer par exemple les systèmes d'anti-blocage de roues ou systèmes ABS qui évitent aux roues de se bloquer durant les phases de freinage du véhicule. En évitant ce blocage, les pneumatiques peuvent alors générer une force de freinage plus importante et optimiser ainsi la distance de freinage du véhicule.

Les systèmes de direction des véhicules ont également été améliorés. De façon historique, l'assistance hydraulique a tout d'abord permis de réduire le niveau d'effort à fournir au volant par le conducteur. Actuellement, la direction assistée électrique dite « direction DAE » tend à supplanter cette technologie à assistance hydraulique.

Les futures innovations porteront notamment sur des systèmes permettant l'ajout de couple sur la colonne de direction (Torque Overlay) permettant ainsi d'aider le conducteur dans certaines situations en lui orientant le volant de direction, des systèmes de commande par fil (steer-by-wire) dans lesquels il n'existe plus de lien mécanique entre le volant et les roues et où seules des informations électriques transitent par un bus électrique, etc... Dans le cadre de ces nouvelles technologies, les organes de type « DAE », activation de direction électrique ou hydraulique ou bien « steer-by-wire » offrent un nouveau degré de liberté qui est un nouveau paramètre dans le réglage des fonctions de la liaison au sol du véhicule.

Ce degré de liberté permet un ajout de couple sur la colonne de direction permettant soit de faire varier le couple conducteur, soit de faire de l'autorotation du volant, ce qui était impossible avec une direction assistée hydraulique seule. Cette nouvelle fonctionnalité permet alors d'améliorer les prestations automobiles dans de nombreuses situations de vie, telles que notamment en compensation de tirage, en aide au freinage « musplit », etc..., mais également lors de manoeuvres à basse vitesse du véhicule où l'on peut alors aider le conducteur afin que celui-ci produise moins de travail au volant pour effectuer les manoeuvres.

La principale fonction d'un système de direction de véhicule automobile est de tourner les roues directrices par exemple avant du véhicule, afin de pouvoir diriger celui-ci. Ceci est réalisé généralement à partir d'un volant de direction, d'une colonne de direction, d'un pignon, d'une crémaillère et de biellettes de direction. Pour diminuer l'effort au niveau du volant, on a introduit des systèmes d'assistance de direction. Ceux-ci étaient par le passé des systèmes hydrauliques pour des questions de puissance. Or, aujourd'hui, on voit apparaître de petits moteurs électriques avec une puissance importante. L'assistance de direction passe alors petit à petit en électrique dans les systèmes appelés « systèmes DAE ». Les roues sont toujours liées mécaniquement au volant et tout braquage du volant entraîne un braquage des roues directrices du véhicule. Un exemple de gestion d'une telle direction à assistance électrique est présenté dans le document EP 1 319 575 qui divulgue les caractéristiques définies dans le préambule de la revendication 1.

### Exposé de l'invention

Le but de l'invention est de simplifier encore les commandes lors de manoeuvres à basse vitesse d'un véhicule.

A cet effet, l'invention a pour objet un système d'aide à la manoeuvre d'un véhicule automobile, conformément à l'objet de la revendication 1.

Suivant d'autres caractéristiques :
- une autre position prédéterminée est une position centrale de la direction dans laquelle les roues directrices du véhicule sont en ligne droite ;
- les moyens de commande comprennent des moyens d'acquisition de la vitesse du véhicule pour déclencher le rappel de la direction dans une position prédéterminée si la vitesse du véhicule est inférieure à une valeur de seuil prédéterminée ;
- les moyens de commande comprennent les moyens d'acquisition de la vitesse du véhicule pour déclencher le rappel de la direction dans une position prédéterminée si la vitesse du véhicule est nulle ;
- les moyens de commande comprennent des moyens d'acquisition du couple appliqué par le conducteur sur le volant pour activer le rappel de la direction dans une position prédéterminée si le conducteur n'applique pas de couple sur ledit volant ;
- les moyens de commande comprennent les moyens d'acquisition du couple appliqué par le conducteur sur le volant pour désactiver le rappel de la direction dans une position prédéterminée si le conducteur reprend en main volant ;
- le système comprend des moyens d'activation/désactivation raccordés à l'unité de traitement d'informations et aptes à activer/désactiver les moyens de commande du rappel de la direction ;
- les moyens de commande du rappel de la direction comprennent des moyens de contrôle de la position prédéterminée dans laquelle la direction est destinée à être rappelée
- le couple de rejet de perturbations est calculé principalement à partir des informations de couple volant et de couple total appliqué par l'actionneur ; et
- les moyens de commande comprennent des moyens formant sommateur pour délivrer à partir du couple de rejet de perturbations et du couple de consigne, le couple de rappel.

### Description sommaire des dessins

D'autres avantages et particularités de l'invention ressortent de la description de modes de réalisation faite ci-après en référence aux dessins annexés dans lesquels :
- la figure 1 représente un schéma synoptique illustrant la structure générale d'un système d'aide selon l'invention ;
- la figure 2 illustre le fonctionnement de celui-ci ;
- la figure 3 représente un graphique montrant les améliorations apportées ; et
- la figure 4 illustre le calcul du couple de rappel.

### Manière(s) de réaliser l'invention

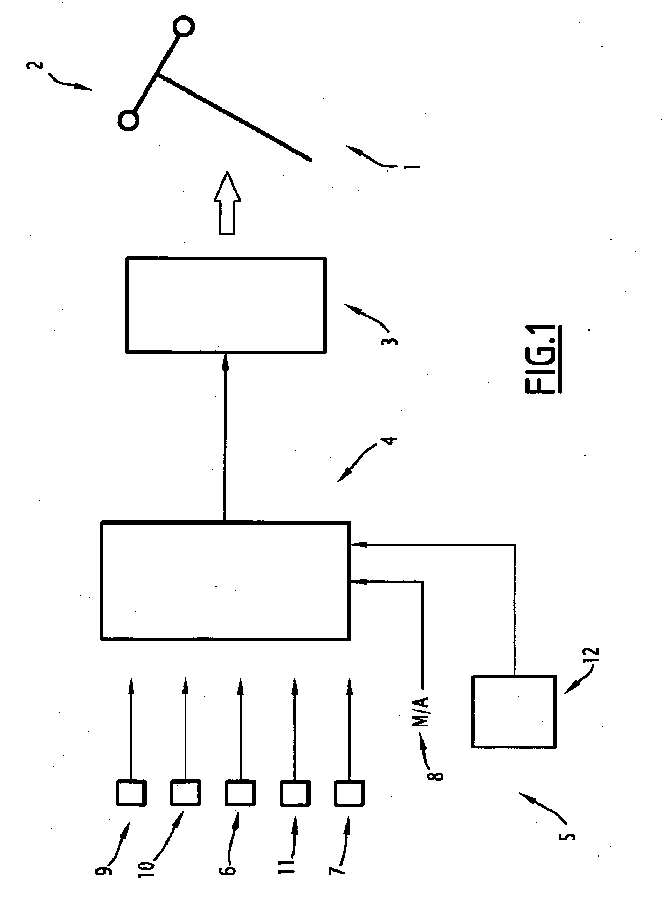

On a en effet illustré sur la figure 1, un système d'aide à la manoeuvre d'un véhicule automobile qui comporte une direction assistée désignée par la référence générale 1 sur cette figure, associée à un volant de direction désigné par la référence générale 2 et à un actionneur d'assistance de direction désigné par la référence générale 3, dont le fonctionnement est piloté par une unité de traitement d'informations désignée par la référence générale 4 pour appliquer un couple d'assistance sur la direction du véhicule.

Comme cela a été indiqué précédemment, l'actionneur 3 de direction assistée peut par exemple être un moteur électrique d'assistance.

Selon l'invention, l'unité de traitement d'informations 4 est raccordée à des moyens de commande 5 du rappel de la direction dans au moins une position prédéterminée ; le but de l'invention étant de faire tourner la direction 1, et donc les roues directrices et le volant 2, sans que le conducteur ne touche au volant 2.

Ces moyens de commande 5 sont aptes à commander le rappel de la direction 1 en une position de butée de la direction dans laquelle les roues du véhicule sont braquée. Bien entendu, les moyens de commande 5 peuvent en plus commander le rappel de la direction assistée dans une position autre que la position debutée, telle que par exemple une position centrale dans laquelle les roues du véhicule sont en ligne droite.

Dans ce cas, les moyens de commande 5 comprennent des moyens de contrôle 12 de la position prédéterminée, afin de permettre au conducteur de choisir entre l'une des deux positions. Le conducteur agit sur ces moyens de contrôle 12, qui se présentent sous la forme d'une interface homme/machine, pour piloter l'unité de traitement d'informations 4 en fonction de ses souhaits de contrôle du braquage de la direction.

Les moyens de commande 5 comportent des moyens d'acquisition de la vitesse 6 du véhicule, pour déclencher le rappel de la direction dans une position prédéterminée, si la vitesse du véhicule est inférieure à une valeur de seuil prédéterminée fixée par exemple à 30 Km/h. Plus particulièrement, le rappel de la direction 1 est activé pour une vitesse du véhicule allant de zéro à la vitesse seuil, en l'occurrence 30 km/h, et le rappel est désactivé pour une vitesse de véhicule supérieure à 30 km/h.

Les moyens de commande comprennent également des moyens d'acquisition du couple 7 appliqué par le conducteur sur le volant si le conducteur pour déclencher le rappel de la direction dans une position prédéterminée, n'applique pas de couple sur le volant. Les moyens de commande 5 comprennent également les moyens d'acquisition du couple 6 appliqué par le conducteur sur le volant 2 pour désactiver le rappel de la direction si le conducteur reprend en main volant 2, alors que le rappel était en train de ce faire.

Ces informations de couple et de vitesse sont alors délivrées à partir de capteurs de couple et de vitesse correspondants.

On conçoit alors que dans ce cas, lorsque la vitesse du véhicule est inférieure à 30 Km/h et que le conducteur n'applique pas de couple sur le volant de direction, le système permet de rappeler la direction en position centrale, c'est-à-dire les roues en position de ligne droite.

L'unité de traitement d'informations est raccordée à des moyens 8 d'activation/désactivation (M/A) de la fonction correspondante. Ces moyens d'activation/désactivation 8 sont donc aptes à activer/désactiver les moyens de commande 5 du rappel de la direction. Ces moyens d'activation/désactivation 8 sont par exemple pilotés par le conducteur. Dans ce cas, ces moyens 8 peuvent être de façon non limitative formés d'un bouton de marche/arrêt de la fonction de rappel du volant, d'un dispositif relié à l'arrêt du véhicule ou à la fermeture du véhicule pour activer les moyens de commande 5 une fois le véhicule arrêté ou fermé.

De même, l'unité de traitement d'informations est également reliée à d'autres capteurs pour asservir le rappel en position.

C'est ainsi par exemple que cette unité de traitement d'informations est également reliée à un capteur d'angle de volant, désigné par la référence générale 9, de vitesse de déplacement de celui-ci désigné par la référence générale 10 et de couple total d'actionneur désigné par la référence générale 11.

On conçoit alors qu'un tel système permet de simplifier les commandes, notamment lors de manoeuvres à basse vitesse du véhicule, et d'utiliser de nouvelles interfaces pour simplifier l'utilisation du véhicule par son conducteur.

Le système utilise alors par exemple le moteur d'assistance de direction pour faire tourner le volant et donc les roues, sans que le conducteur ne touche à son volant. L'objectif de l'invention est donc de diviser le travail du conducteur lors des manoeuvres à basse vitesse.

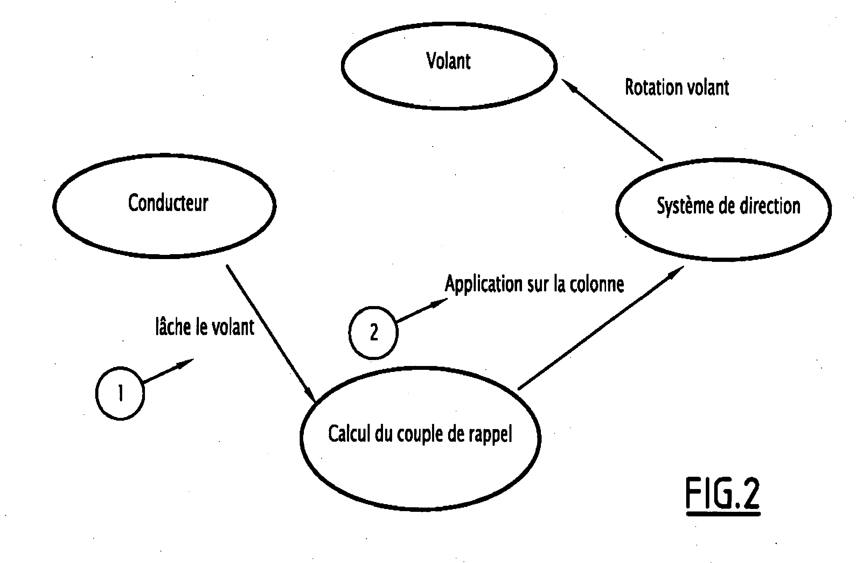

Ceci est par exemple illustré sur la figure 2, dans laquelle on peut constater que les moyens de commande sont adaptés pour calculer un couple de rappel lorsque le conducteur du véhicule lâche le volant et que la vitesse du véhicule est inférieure par exemple à la valeur de seuil prédéterminée de 30 Km/h.

Ce couple est ensuite appliqué sur la colonne et au système de direction pour faire tourner le volant et donc amener les roues dans la position prédéterminée.

Lors de manoeuvres à basse vitesse avec des systèmes de l'état de la technique comprenant par exemple la vitesse de véhicule nulle, le moment d'auto-alignement du train directeur du véhicule est très faible car la vitesse du véhicule est faible. Celui-ci ne peut donc pas ramener le volant vers le centre, car son effet est très nettement inférieur au couple de ripage des pneumatiques. C'est pour cela qu'à vitesse nulle, lorsque le conducteur lâche le volant de direction, celui-ci reste en place après une légère oscillation due au couple de torsion des pneumatiques.

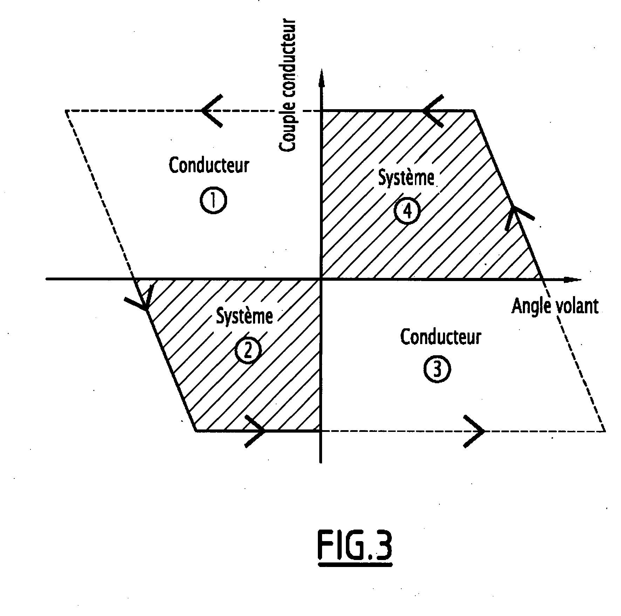

En manoeuvre à basse vitesse, le conducteur travaille donc dans les quatre quadrants illustrés sur la figure 3, illustrant la relation couple conducteur/angle volant.

Il doit alors ramener son volant vers le centre lors de manoeuvres dans les quadrants 2 et 4 illustrés.

Le système selon l'invention en utilisant le système de direction pour ajouter du couple sur la colonne et ainsi rappeler le volant vers le centre lorsque le conducteur lâche celui-ci, permet au conducteur de ne travailler alors que dans les quadrants négatifs 1 et 3, ce qui divise par deux son travail au volant.

Lorsque le véhicule est à l'arrêt, notamment après une manoeuvre de parking, les moyens de commande 5 sont activés et contrôlent le rappel du volant dans une position prédéterminée, avantageusement la position centrale. En effet, à vitesse du véhicule nulle, lorsque le conducteur lâche son volant 2, les roues directrices (et donc le volant 2) restent en place du fait du fort couple de ripage des pneumatiques. Avec les moyens de commande 5 selon l'invention, le volant 2 revient en position centrale sans effort de la part du conducteur.

Comme cela a été indiqué précédemment, le système peut être piloté à travers une interface homme-machine, c'est-à-dire par exemple des boutons de commande ou être présent de façon permanente dans le véhicule.

L'unité de traitement d'informations intégrée dans le système selon l'invention utilise alors les informations d'angle de volant, de vitesse volant, de couple volant et de couple total de l'actionneur de direction assistée.

A partir de l'information de couple volant, le système détecte de manière continue si le conducteur maintient ou non son volant. Si le conducteur lâche le volant dans la plage de vitesses ciblée, comprise par exemple entre 0 et 30 Km/h, le système calcule alors un couple de rappel à partir des informations d'angle de volant, de vitesse volant, de couple volant et de couple total d'actionneur pour permettre de ramener le volant vers le centre.

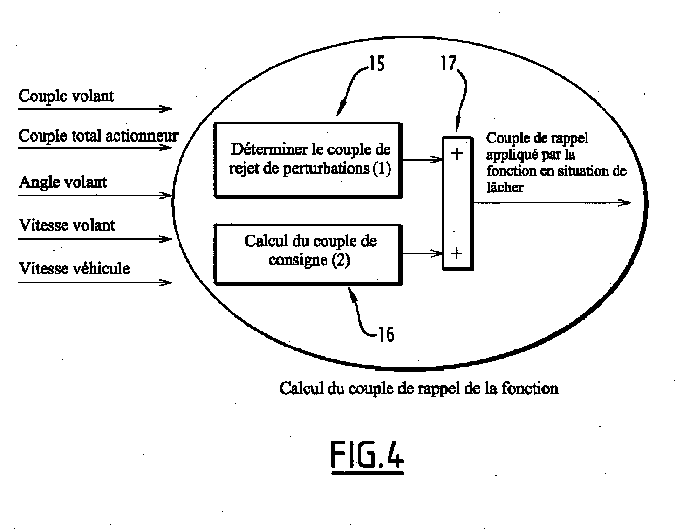

Si le conducteur reprend le volant alors le système coupe de manière continue le couple additionnel. Le calcul du couple de rappel en situation de lâché du volant est illustré sur la figure 4. En fait, ce couple de rappel appliqué sur la colonne de direction par l'actionneur peut être décomposé comme étant la somme de deux couples distincts et homogènes.

L'un des couples est un couple dit de rejet de perturbations désigné par la référence générale 15 sur cette figure 4, qui correspond au couple résistant appliqué par le système de direction. Ce couple résistant correspond alors aux efforts de crémaillère, aux inerties équivalentes, aux frottements secs et visqueux, etc... Ce couple est calculé principalement à partir des informations de couple volant et de couple total appliqué par l'actionneur. Le couple volant obtenu si l'on applique ce couple avec un système selon l'invention, est donc nul.

L'autre couple est un couple dit de consigne désigné par la référence générale 16 sur cette figure 4, qui est équivalent au couple nécessaire pour piloter la rotation du volant. Ce couple est donc équivalent au couple volant mesuré et est indépendant des conditions extérieures au système de direction. De fait, le couple de rappel peut être calculé à partir d'informations, comme par exemple, l'angle volant, la vitesse, etc.., c'est-à-dire directement ou par calcul direct ou asservissement, c'est-à-dire indirectement.

Les moyens de calcul correspondants sont alors raccordés en entrée aux différents détecteurs et capteurs mentionnés précédemment, permettant d'obtenir le couple volant, le couple total actionneur, l'angle volant, la vitesse du volant, la vitesse du véhicule.

En sortie, ces moyens de calcul sont raccordés à des moyens formant sommateur désignés par la référence générale 17 sur cette figure 4, pour délivrer à partir de ces deux couples, le couple de rappel appliqué par la fonction en situation de lâché du volant.

Bien entendu, d'autres modes de réalisation encore peuvent être envisagés ; ce système assurant un rappel de la direction dans une position prédéterminée et donc un pilotage angulaire de la direction (ou un pilotage de la position angulaire du volant), afin de réduire les efforts du conducteur et d'amener les roues directrices du véhicule précisément dans la position souhaitée.

## Revendications

1. Système d'aide à la manoeuvre d'un véhicule automobile, du type comportant une direction assistée (1), associée à un volant (2) et à un actionneur (3) d'assistance de direction dont le fonctionnement est piloté par une unité de traitement d'informations (4) pour appliquer un couple d'assistance sur la direction du véhicule, comprenant des moyens de commande (5) du rappel de la direction (1) dans au moins une position prédéterminée raccordés à l'unité de traitement d'informations (4), lesdits moyens de commande (5) comprenant des moyens de calcul d'un couple de rappel à partir d'un couple de rejet de perturbations correspondant au couple résistant appliqué par le système de direction et d'un couple de consigne correspondant au couple nécessaire pour piloter la rotation du volant, **caractérisé en ce qu'**une des positions prédéterminées est une position de butée de la direction dans laquelle les roues du véhicule sont braquées.

2. Système selon la revendication 1, **caractérisé en ce qu'**une autre position prédéterminée est une position centrale de la direction dans laquelle les roues directrices du véhicule sont en ligne droite.

3. Système selon l'une quelconque des revendications précédentes, **caractérisé en ce que** les moyens de commande (5) comprennent des moyens d'acquisition de la vitesse du véhicule (7) pour déclencher le rappel de la direction (1) dans une position prédéterminée si la vitesse du véhicule est inférieure à une valeur de seuil prédéterminée.

4. Système selon la revendication 3, **caractérisé en ce que** les moyens de commande (5) comprennent les moyens d'acquisition de la vitesse (7) du véhicule pour déclencher le rappel de la direction (1) dans une position prédéterminée si la vitesse du véhicule est nulle.

5. Système selon l'une quelconque des revendications précédentes, **caractérisé en ce que** les moyens de commande (5) comprennent des moyens d'acquisition du couple (6) appliqué par le conducteur sur le volant (2) pour activer le rappel de la direction (1) dans une position prédéterminée si le conducteur n'applique pas de couple sur ledit volant (2).

6. Système selon la revendication 5, **caractérisé en ce que** les moyens de commande (5) comprennent les moyens d'acquisition du couple (6) appliqué par le conducteur sur le volant (2) pour désactiver le rappel de la direction (1) dans une position prédéterminée si le conducteur reprend en main volant (2).

7. Système selon l'une quelconque des revendications précédentes, **caractérisé en ce qu'**il comprend des moyens d'activation/désactivation (8) raccordés à l'unité de traitement d'informations (4) et aptes à activer/désactiver les moyens de commande (5) du rappel de la direction (1)..

8. Système selon l'une quelconque des revendications précédentes, **caractérisé en ce que** les moyens de commande (5) du rappel de la direction (1) comprennent des moyens de contrôle (12) de la position prédéterminée dans laquelle la direction (1) est destinée à être rappelée.

9. Système selon l'une quelconque des revendications précédentes, **caractérisé en ce que** le couple de rejet de perturbations est calculé principalement à partir des informations de couple volant et de couple total appliqué par l'actionneur (3).

10. Système selon l'une quelconque des revendications précédentes, **caractérisé en ce que** les moyens de commande (5) de rappel de la direction (1) comprend des moyens formant sommateur (17) pour délivrer à partir du couple de rejet de perturbations et du couple de consigne, le couple de rappel.

## Claims

1. Assisted steering system for a motor vehicle, of the type comprising a power steering system (1) associated with a steering wheel (2) and with a power steering actuator (3) of which the operation is controlled by a data processing unit (4) in order to apply an assisting torque to the steering of the vehicle, comprising means (5) which control the return of the steering system (1) into at least one predetermined position and are connected to the data processing unit (4), said control means (5) comprising means for calculating a return torque from a disturbance rejection torque corresponding to the resistance torque applied by the steering system and from a setpoint torque corresponding to the torque required to control the rotation of the steering wheel, **characterised in that** one of the predetermined positions is a stop position of the steering system, in which the wheels of the vehicle are turned.

2. System according to claim 1, **characterised in that** a further predetermined position is a central position of the steering system in which the steered wheels of the vehicle are oriented in a straight line.

3. System according to any one of the preceding claims, **characterised in that** the control means (5) comprise means for acquiring the speed of the vehicle (7) in order to trigger the return of the steering system (1) into a predetermined position if the speed of the vehicle is less than a predetermined threshold value.

4. System according to claim 3, **characterised in that** the control means (5) comprise means for acquiring the speed (7) of the vehicle in order to trigger the return of the steering system (1) into a predetermined position if the speed of the vehicle is zero.

5. System according to any one of the preceding claims, **characterised in that** the control means (5) comprise means for acquiring the torque (6) applied by the driver to the steering wheel (2) in order to activate the return of the steering system (1) into a predetermined position if the driver does not apply torque to said steering wheel (2).

6. System according to claim 5, **characterised in that** the control means (5) comprise means for acquiring the torque (6) applied by the driver to the steering wheel (2) in order to deactivate the return of the steering system (1) into a predetermined position if the driver takes hold of the steering wheel (2) again.

7. System according to any one of the preceding claims, **characterised in that** it comprises activation/deactivation means (8) connected to the data processing unit (4) and able to activate/deactivate the means (5) for controlling the return of the steering system (1).

8. System according to any one of the preceding claims, **characterised in that** the means (5) for controlling the return of the steering system (1) comprise means (12) for monitoring the predetermined position into which the steering system (1) is intended to be returned.

9. System according to any one of the preceding claims, **characterised in that** the disturbance rejection torque is calculated mainly from the data of the steering wheel torque and total torque applied by the actuator (3).

10. System according to any one of the preceding claims, **characterised in that** the means (5) for controlling the return of the steering system (1) comprise means forming an adder (17) in order to supply the return torque from the disturbance rejection torque and the setpoint torque.

## Patentansprüche

1. Hilfslenkung für ein Kraftfahrzeug, die eine Servolenkung (1) aufweist, die mit einem Lenkrad (2) und einem Aktuator (3) zur Lenkungsunterstützung verbunden ist, dessen Betrieb von einer EDV-Einheit (4) zur Aufbringung eines Unterstützungsmoments auf die Fahrzeuglenkung gesteuert wird, umfassend Steuermittel (5) zur Lenkungsrückstellung (1) auf mindestens eine vorbestimmte Position, die mit der EDV-Einheit (4) verbunden sind, wobei die besagten Steuermittel (5) Mittel zur Berechnung eines Rückstellmoments aus einem Störgrößenunterdrückungsmoment, das dem von der Lenkung aufgebrachten Widerstandsmoment entspricht, und einem Sollmoment, das dem zur Drehung des Lenkrads notwendigen Moment entspricht, umfassen, **dadurch gekennzeichnet, dass** eine der vorbestimmten Positionen eine Anschlagposition der Servolenkung ist, bei der die Fahrzeugräder gedreht sind.

2. Hilfslenkung nach Anspruch 1, **dadurch gekennzeichnet, dass** eine andere vorbestimmte Position eine mittige Position der Lenkung ist, bei der sich die Lenkräder des Fahrzeugs in Geradeausstellung befinden.

3. Hilfslenkung nach einem der vorstehenden Ansprüche, **dadurch gekennzeichnet, dass** die Steuermittel (5) Mittel zur Erfassung der Fahrzeuggeschwindigkeit (7) umfassen, um die Rückstellung der Lenkung (1) auf eine vorbestimmte Position auszulösen, wenn die Geschwindigkeit des Fahrzeugs unter einem vorbestimmten Schwellenwert liegt.

4. Hilfslenkung nach Anspruch 3, **dadurch gekennzeichnet, dass** die Steuermittel (5) Mittel zur Erfassung der Fahrzeuggeschwindigkeit (7) umfassen, um die Rückstellung der Lenkung (1) auf eine vorbestimmte Position auszulösen, wenn die Geschwindigkeit des Fahrzeugs gleich null ist.

5. Hilfslenkung nach einem der vorstehenden Ansprüche, **dadurch gekennzeichnet, dass** die Steuermittel (5) Mittel zur Erfassung des vom Fahrer auf das Lenkrad (2) aufgebrachten Moments (6) umfassen, um die Rückstellung der Lenkung (1) auf eine vorbestimmte Position zu aktivieren, wenn der Fahrer kein Moment auf das besagte Lenkrad (2) aufbringt.

6. Hilfslenkung nach Anspruch 5, **dadurch gekennzeichnet, dass** die Steuermittel (5) Mittel zur Erfassung des vom Fahrer auf das Lenkrad (2) aufgebrachten Moments (6) umfassen, um die Rückstellung der Lenkung (1) auf eine vorbestimmte Position zu deaktivieren, wenn der Fahrer das Lenkrad (2) wieder in Händen hält.

7. Hilfslenkung nach einem der vorstehenden Ansprüche, **dadurch gekennzeichnet, dass** es Aktivierungs-/Deaktivierungsmittel (8) umfasst, die mit der EDV-Einheit (4) verbunden und in der Lage sind, die Steuermittel (5) zur Rückstellung der Lenkung (1) zu aktivieren/deaktivieren.

8. Hilfslenkung nach einem der vorstehenden Ansprüche, **dadurch gekennzeichnet, dass** die Steuermittel (5) für die Rückstellung der Lenkung (1) Mittel zur Kontrolle (12) der vorbestimmten Position umfassen, auf die die Lenkung (1) zurückgestellt werden soll.

9. Hilfslenkung nach einem der vorstehenden Ansprüche, **dadurch gekennzeichnet, dass** das Störgrößenunterdrückungsmoment hauptsächlich anhand der Daten des Lenkmoments und des vom Aktuator (3) aufgebrachten Gesamtmoments berechnet wird.

10. Hilfslenkung nach einem der vorstehenden Ansprüche, **dadurch gekennzeichnet, dass** die Steuermittel (5) zur Rückstellung der Lenkung (1) Summierungsmittel (17) umfassen, um ausgehend vom Störgrößenunterdrückungsmoment und dem Sollmoment das Rückstellmoment zu liefern.
